Europäisches Patentamt

**European Patent Office**

Office européen des brevets

(11) Numéro de publication: **0 228 952**
**B1**

(12) **FASCICULE DE BREVET EUROPEEN**

(45) Date de publication du fascicule du brevet:
**20.12.89**

(21) Numéro de dépôt: **86402758.6**

(22) Date de dépôt: **11.12.86**

(51) Int. Cl.⁴: **B29C 41/02**
// (B29K67/00, 105:08)

(54) Procédé de fabrication par moulage d'objet en matière synthétique.

(30) Priorité: **12.12.85 FR 8518419**

(43) Date de publication de la demande:
**15.07.87 Bulletin 87/29**

(45) Mention de la délivrance du brevet:
**20.12.89 Bulletin 89/51**

(84) Etats contractants désignés:
**AT BE CH DE ES FR GB GR IT LI LU NL SE**

(56) Documents cités:
**EP-A- 0 001 865**
**EP-A- 0 019 947**
**EP-A- 0 116 506**
**DE-A- 2 154 756**

**COMPOSITES,**
**vol. 25, no. 3, mai-juin 1985, pages 57-61, Paris, FR; P. JACQUINET: "In mould coating. Une amélioration des préimprégnés polyesters"**

(73) Titulaire: **STRATINOR, société anonyme, 1 et 3 rue du Maréchal Leclerc, F-59441 Wasquehal(FR)**

(72) Inventeur: **Labonne, Michel, Rue de Montplaisir, F-81170 Isle(FR)**

(74) Mandataire: **Rieux, Michel, NORSOLOR Service Propriété Industrielle Tour Aurore 18, Place des Reflets Cedex no. 5, F-92080 Paris la Défense 2(FR)**

ACTORUM AG

## Description

La présente invention concerne un procédé de fabrication par moulage d'objets en matière synthétique.

Il est déjà connu par le brevet européen n° 0 001 865 un procédé de fabrication d'objets à trois dimensions consistant à mouler une matière plastique synthétique dans un moule dont la paroi est pourvue d'une résine de polyester et d'un catalyseur de durcissement avant que la matière à mouler soit mise dans le moule, caractérisé en ce que la résine de polyester est le polyester thermodurcissable non saturé, mélangé avec un monomère sec et un prépolymère sans composants qui se mettent en ébullition ou s'évaporent à la température de la paroi du moule, laquelle résine de polyester est appliquée sous forme de poudre ou bien, à une température de 80 à 120°C, dans une forme atomisée, à la paroi de moule qui a une température de 90 à 150°C, et elle est polymérisée en un état thermoflexible avant que la matière à mouler, composée d'une résine thermodurcissable, de charges minérales et d'un catalyseur de durcissement, soit placée dans le moule et soumise à une pression à une température élevée.

On connaît également, par le brevet français n° 2 540 781, un procédé de moulage d'objets creux en matière plastique synthétique consistant à revêtir la paroi intérieure d'un moule chauffé d'une poudre de matière plastique thermodurcissable, puis à placer dans le moule une composition de moulage comprenant une résine thermodurcissable, des charges minérales et un catalyseur, à durcir et polymériser le contenu du moule par application de la pression et de la chaleur et à démouler l'objet dont le revêtement est solidement ancré à la composition de moulage, caractérisé en ce qu'on applique par pulvérisation sur la paroi du moule porté à une température de 130 à 180°C une poudre sèche d'une matière plastique choisie dans le groupe comprenant les résines mélamine-formaldéhyde, les résines urée-formaldéhyde et les résines phénoliques, dont les particules se gélifient au contact des parois du moule sans couler pour former un revêtement.

Cependant il est connu que les objets moulés selon le procédé décrit dans le brevet européen n° 0 001 865, présentent un mauvais aspect décoratif car la surface extérieure de l'objet, revêtue selon cette technique par une poudre de polyester, présente souvent, lorsque cette poudre est claire, des taches jaunâtres. Les objets obtenus, selon le procédé décrit dans le brevet français n° 2 540 781 possèdent un aspect de surface décoratif satisfaisant mais présentent une résistance insuffisante à certains solvants agressifs et à la chaleur. De plus ces deux procédés sont difficiles à mettre en œuvre car ils demandent que la matière thermodurcissable, qui servira de revêtement à l'objet fini, soit appliquée sous forme solide dans le moule à chaud. On connaît (voir Brevet Europe 19 947) un procédé mettant en œuvre de fines particules solides ou liquides. Ce procédé conduit aussi à des produits finis présentant un aspect de surface médiocre en ce qui concerne la coloration.

La présente invention entend donc apporter une solution économique pour la réalisation, par moulage, d'objets à base de préimprégné polyester possédant tout à la fois un excellent aspect décoratif, de très bonnes caractéristiques mécaniques, une excellente résistance aux agents chimiques ainsi qu'une très bonne résistance à l'eau.

L'invention concerne donc un procédé de fabrication, par moulage, d'un objet en matière synthétique, consistant à revêtir au moins une paroi d'un moule chauffe, de matière thermodurcissable, puis à placer dans le moule une composition de préimprégné polyester, à durcir et polymériser le contenu du moule par application de la chaleur et de la pression et enfin démouler l'objet formé par la composition polymérisée du préimprégné polyester sur laquelle la matière thermodurcie est solidement ancrée, caractérisé en ce que la matière thermodurcissable comprend au moins une résine polyester liquide et en ce que la température de la paroi chaude du moule, est comprise entre 120°C et 180°C.

Selon l'invention, on entend par moulage les techniques bien connues pour le moulage à chaud des pièces à base de préimprégné polyester, telles que notamment la compression, l'injection, l'injection-compression et le transfert, la pression appliquée à la matière moulée étant avantageusement comprise entre 50 bars et 250 bars. La température de la paroi chaude du moule est avantageusement comprise entre 140°C et 160°C. De la même façon, on entend par composition de préimprégné polyester, une feuille ou une couche épaissie au moyen d'un oxyde métallique du deuxième groupe de la classification périodique, d'une épaisseur supérieure à 1 mm connue couramment sous le nom de "Sheet moulding compound", ce préimprégné étant constitué d'une matrice en résine de polyester insaturé, d'un renfort en fibres de verre coupées ou continues et des adjuvants bien connus de l'homme de l'art, tel que catalyseur de durcissement, activateur etc. La matrice en résine de polyester insaturé possède avantageusement, avant durcissement, une viscosité comprise entre $2.10^4$ Pa.s et $8.10^4$ Pa.s à 25°C, mesurée de façon connue au moyen d'un viscosimètre commercialisé par la société BROOKFIELD, sous la dénomination "HBT" avec une aiguille F, pour une vitesse de rotation égale à 1 tour par minute.

Selon l'invention, on entend par résine polyester liquide entrant dans la composition de la matière thermodurcissable une résine à base de polyester insaturé en solution dans au moins un monomère insaturé tel que notamment le styrène. La matière thermodurcissable comprend en outre au moins un agent thixotropique, au moins un catalyseur, au moins un inhibiteur de gélification prématurée, au moins un activateur de polymérisation et, le cas échéant, au moins un colorant. Elle est couramment appelée gelcoat à chaud. Elle permet selon l'invention d'obtenir des objets en matière synthétique présentant un bon aspect de surface.

Le procédé pour obtenir ces objets consiste successivement à :
- appliquer au moyen d'un pistolet ou d'une brosse, la matière thermodurcissable, sur au moins une paroi d'un moule chauffé à une température comprise entre 120°C et 180°C, avantageusement entre 140°C et 160°C,
- placer dans le moule la composition de préimprégné polyester,
- appliquer la pression (avantageusement comprise entre 50 et 250 bars) sur les parois du moule, et
- démouler l'objet obtenu comportant la couche de matière thermodurcie, d'une épaisseur par exemple comprise entre 0,05 et 0,5 mm, solidement ancrée sur la composition polymérisée du préimprégné polyester.

Les objets obtenus dans le cadre de la présente invention présentent, à la fois, un excellent aspect de surface, de très bonnes propriétés mécaniques et de résistance aux produits chimiques qui les rendent particulièrement intéressants pour les applications dans de nombreux secteurs, en particulier le sanitaire, le mobilier, l'industrie du transport, l'industrie électrotechnique, l'industrie de l'électroménager, les télécommunications.

Les exemples non limitatifs sont fournis ci-après pour illustrer l'invention.

### Exemple 1 :

On applique sur l'une des empreintes d'un moule de compression, préchauffé à la température de 140°C, en forme de coque, de dimensions 700 mm par 400 mm, avec un entrefer d'une épaisseur de 4 mm, au moyen d'un pistolet à peinture, une couche d'une composition de résine liquide de polyester insaturé thermodurcissable commercialisée par la société FERRO sous la marque "ISOGEL PC 11495" dans laquelle ont été incorporés préalablement 2 % en poids de perbenzoate de tertiobutyle.

On introduit ensuite, dans le moule une composition de préimprégné polyester commercialisée par la société CdF CHIMIE RESINES sous la marque "NORSOPREG BR 2201".

On applique à la matière une pression de 115 bars pendant une durée de 150 secondes, la température étant maintenue à 140°C.

On obtient un objet en matière synthétique dont la face recouverte par la matière thermodurcie présente les caractéristiques suivantes :
- Selon la norme DIN 53799:
- Test à la cigarette : correct
- Test à l'eau bouillante : . prise de poids : 0,12 %
. gonflement : 0,54%
. Test à la vapeur d'eau : correct ( ni boursouflures ni altération de brillance ou de couleur)
Test de résistance aux produits chimiques et aux taches : insensible à l'eau de Javel à 5° Cl, à l'alcool (solution à 30 % d'éthanol dans l'eau), à l'ammoniaque à 50 %, à l'eau oxygénée à 10 volumes.
- Test de résistance à la lumière selon la norme française NFT 51056 :
aucune dégradation du revêtement ni altération de couleur et de brillance.

### Exemple 2 :

On moule à 160°C les matières utilisées à l'exemple 1, dans une empreinte d'un moule de compression en forme de plateau de 755 mm sur 595 mm et un entrefer de 6,5 mm, préchauffé à une température de 160°C.

L'objet en matière synthétique obtenu présente sur sa face recouverte par la matière thermodurcie les caractéristiques suivantes :
- Selon la norme DIN 53 799 :
. Test à la cigarette : correct
. Test à l'eau bouillante : . prise de poids : 0,12 %
. gonflement : 0,54 %
. Test à la vapeur d'eau : correct, pas de boursouflures ni d'altération de brillance ou de couleur
. Test de résistance aux produits chimiques et aux taches :
insensible à l'eau de Javel à 5° Cl, à l'alcool (solution à 30 % d'éthanol dans l'eau), à l'ammoniaque à 50 %, à l'eau oxygénée à 10 volumes.
- Test de résistance à la lumière selon la norme française NFT 51056 :
. aucune dégradation du revêtement ni altération de couleur et de brillance.
- Test de résistance à la rayure clémen selon la norme britannique DEF 1053
. aucune rayure pour une charge de 500 g
- Test de résistance à la casserole chaude selon la norme DIN 53799 :
. aucune boursouflure, vernissage et perte de couleur par observation à l'oeil nu
. aucune fissure détectée après observation à la lunette binoculaire pour un grossissement de 7.

## Revendications

1. Procédé de fabrication, par moulage, d'un objet en matière synthétique, consistant à revêtir au moins une paroi d'un moule chauffé, de matière thermodurcissable, puis à placer dans le moule une composition de préimprégné polyester, à durcir et polymériser le contenu du moule par application de la chaleur et de la pression et enfin démouler l'objet formé par la composition polymérisée du préimprégné polyester sur laquelle la matière thermodurcie est solidement ancrée, caractérisé en ce que la matière thermodurcissable est constituée d'un gel coat à chaud qui comprend au moins une résine polyester liquide à base de polyester insaturé en solution dans au moins un monomère insaturé, et en ce que la température de la paroi chaude du moule est comprise entre 120°C et 180°C.

2. Procédé selon la revendication 1, caractérisé en ce que la composition de préimprégné polyester comprend une feuille ou une couche épaissie au moyen d'un oxyde métallique du deuxième groupe de la classification périodique, d'une épaisseur supérieure à 1 mm connue couramment sous le nom de "Sheet moulding compound" et comprenant une matrice en résine de polyester insaturé et un renfort.

3. Procédé selon l'une des revendications 1 à 2, caractérisé en ce que la matrice en résine de polyester insaturé posède avantageusement, avant durcissement, une viscosité comprise entre $2.10^4$ Pa.s et $8.10^4$ Pa.s à 25°C.

4. Procédé selon l'une des revendications 1 à 3, caractérisé en ce que la pression de moulage est comprise entre 50 et 250 bars.

5. Procédé selon l'une des revendications 1 à 4 caractérisé en ce que l'épaisseur de la couche de matière thermodurcie est comprise entre 0,05 et 0,5 mm.

## Patentansprüche

1. Verfahren zur Herstellung eines Kunststoffgegenstandes durch Formpressen, welches darin besteht, daß mindestens eine Wand einer beheizten Form mit wärmehärtbarem Material überzogen wird, sodann eine Polyester-Prepreg-Zusammensetzung in der Form angeordnet wird, der Inhalt der Form durch Anwendung von Wärme und Druck ausgehärtet und polymerisiert wird und schließlich der von der polymerisierten Polyester-Prepreg-Zusammensetzung, auf der das wärmegehärtete Material fest verankert ist, gebildete Gegenstand ausgeformt wird, dadurch gekennzeichnet, daß das wärmehärtbare Material aus einer warm abbindenden Gelschicht gebildet ist, die mindestens ein flüssiges Polyesterharz auf Basis von ungesättigtem Polyester in Lösung in mindestens einem ungesättigten Monomer enthält, und daß die Temperatur der heißen Wand der Form zwischen 120° und 180°C liegt.

2. Verfahren nach Anspruch 1, dadurch gekennzeichnet, daß die Polyester-Prepreg-Zusammensetzung eine mittels eines Metalloxides der zweiten Gruppe des Periodensystems eingedickte Folie oder Schicht einer Dicke von mehr als 1 mm ist, die unter der Bezeichnung "Sheet moulding compound" allgemein bekannt ist und eine Harzmatrix aus ungesättigtem Polyester und eine Verstärkung enthält.

3. Verfahren nach Anspruch 1 oder 2, dadurch gekennzeichnet, daß die Harzmatrix aus ungesättigtem Polyester vorteilhaft vor dem Aushärten eine Viskosität zwischen $2.10^4$ Pa.s und $8.10^4$ Pa.s bei 25°C besitzt.

4. Verfahren nach einem der Ansprüche 1 bis 3, dadurch gekennzeichnet, daß der Preßformdruck zwischen 50 und 250 bar beträgt.

5. Verfahren nach einem der Ansprüche 1 bis 4, dadurch gekennzeichnet, daß die Dicke der Schicht aus wärmegehärtetem Material zwischen 0,05 und 0,5 mm beträgt.

## Claims

1. Process for the manufacture, by moulding, of an article made of synthetic material, consisting in coating at least one wall of a heated mould with a heat-curable material, in next placing in the mould a polyester prepreg composition, in curing and polymerizing the contents of the mould by the application of heat and pressure and in finally demoulding the article formed by the polymerized polyester prepreg composition into which the thermoset material is firmly anchored, characterized in that the heat-curable material consists of a hot coating gel which comprises at least one liquid polyester resin based on an unsaturated polyester in solution in at least one unsaturated monomer, and in that the temperature of the hot wall of the mould is between 120°C and 180°C.

2. Process according to Claim 1, characterized in that the polyester prepreg composition comprises a sheet or a layer thickened by means of a metal oxide of the second group of the Periodic Classification, with a thickness greater than 1 mm, generally known by the name of "sheet moulding compound" and comprising a matrix of unsaturated polyester resin and a reinforcement.

3. Process according to one of Claims 1 to 2, characterized in that, before curing, the unsaturated polyester resin matrix has advantageously a viscosity of between $2 \times 10^4$ pa s and $8 \times 10^4$ pa s at 25°C.

4. Process according to one of Claims 1 to 3, characterized in that the moulding pressure is between 50 and 250 bars.

5. Process according to one of Claims 1 to 4, characterized in that the thickness of the layer of thermoset material is between 0.05 and 0.5 mm.